# EUROPEAN PATENT APPLICATION

(11) **EP 4 117 376 A1**
(43) Date of publication of application: **11.01.2023**
(21) Application number: 20923809.6
(22) Date of filing: 08.12.2020
(51) Int. Cl.: H04W 74/00

(54) **RANDOM ACCESS CHANNEL (PRACH) SIGNAL TRANSMISSION METHOD AND DEVICE**

(30) Priority: 07.03.2020 CN 202010154339
(71) Applicant: Datang Mobile Communications Equipment Co., Ltd., Beijing 100085 (CN)
(72) Inventor: MIAO, Deshan, Beijing 100085 (CN); MA, Dongjun, Beijing 100085 (CN)
(74) Representative: Nony
(86) International application number: PCT/CN2020/134596
(87) International publication number: WO 2021/179704

(57) **Abstract**

Provided in the present disclosure is a random access channel (PRACH) signal transmission method and device, the method comprising: on the basis of a system agreement or according to acquiring an instruction from a network side device, determining delay information for sending a PRACH signal; and according to a calculated initial timing advance (TA) and the delay information, sending the PRACH signal at a PRACH signal sending opportunity. Thus, the problem in existing PRACH signal transmission methods in which interference exists between PRACH signals when TA estimation is not accurate is solved.

## Description

### Cross-Reference of Related Applications

The present application claims the priority from Chinese Patent Application No. 202010154339.2, filed with the Chinese Patent Office on March 7, 2020 and entitled "Random Access Channel (PRACH) Signal Transmission Method and Device", which is hereby incorporated by reference in its entirety.

### Field of Invention

The present disclosure relates to the field of wireless communication technologies, and in particular, to a PRACH signal transmission method and device.

### Background

The random access is a basic and important process in a Long Term Evolution (LTE) system, and the random access can establish uplink time-frequency synchronization and request a network to allocate uplink resources to terminals. Therefore, the random access can be used not only for initial access, but also for new cell access during handover, access after connection failure of the radio link, and recovery of uplink time-frequency synchronization when there is uplink or downlink data transmission, etc.

In a current mobile communication system, when a UE initially accesses a cell, it needs to perform the downlink cell search and downlink time-frequency synchronization at first, and then send an uplink random access signal to perform the uplink time-frequency synchronization. In the uplink synchronization, since there are a plurality of UEs competing for access in the uplink access process, it is necessary to distinguish the identifiers of different UEs. Currently, a random access preamble sequence is usually used as a random access signal, i.e., Physical Random Access Channel (PRACH) signal. The PRACH signal can help the base station to estimate the time and frequency deviations of different UEs during random access, and is very important in the uplink synchronization.

In the satellite communication, when a terminal sends a PRACH signal, the terminal needs to autonomously compensate the Timing Advance (TA) for timing control based on the timing of the downlink received signal, and then sends the PRACH signal. At present, when the UE autonomously compensates the TA, the positioning of the UE position and the positioning of the satellite position are relied on, while the positioning of the satellite position is performed based on the estimation of the satellite ephemeris information. If the satellite ephemeris information is not updated in time, the estimation of the satellite position will be inaccurate, which will lead to the inaccurate TA estimation of the UE and thus a time deviation in sending the PRACH signal, so that there is interference between the PRACH signal sent by the UE and the uplink signals sent by other UEs, and the error will also occur in the detection of the base station. To sum up, the current PRACH signal transmission method has the problem of interference of the PRACH signal due to the inaccurate TA estimation.

### Summary

The disclosure provides a PRACH signal transmission method and device, so as to solve the problem of interference of the PRACH signal due to the inaccurate TA estimation in the existing PRACH signal transmission method.

A first aspect of embodiments of the disclosure provides a PRACH signal transmission method, which is applied to a User Equipment (UE). The method includes: determining delay information for transmitting a PRACH signal based on a system agreement or according to an instruction obtained from a network side device; and transmitting the PRACH signal at a PRACH signal transmission occasion according to an initial TA and the delay information.

Optionally, the delay information for transmitting the PRACH signal includes at least one of: the initial TA minus a TA offset value; a guard interval configured before a random access preamble or Cyclic Prefix (CP) in a PRACH signal format; a transmission guard interval added before transmitting the PRACH signal; or GT adjustment information due to delayed transmission.

Optionally, the GT adjustment information is: removing a CP part in a PRACH signal format, a length of a newly-added GT, or reserving newly-added guard time required for delayed transmission after the PRACH signal.

Optionally, the sending the PRACH signal at the PRACH signal transmission occasion, includes: determining a final TA value by subtracting a TA offset value from the initial TA, and transmitting the PRACH signal; or transmitting the PRACH signal based on a PRACH signal format with a guard interval before a preamble signal or CP and based on a signal time sequence advanced by the initial TA; or adding a transmission guard interval based on a signal advanced by the initial TA, and then transmitting the PRACH signal.

Optionally, the method further includes: obtaining configuration information of a PRACH transmission occasion or transmission slot indicated by the network side device to be closed; stopping transmitting the PRACH signal or PUSCH data in the corresponding PRACH transmission occasion or transmission slot or an adjacent slot according to the configuration information.

A second aspect of the embodiments of the disclosure provides a PRACH transmission method, which is applied to a network side device, and the method includes: determining delay information that a PRACH signal is sent by delay according to a system agreement, or determining delay information that a PRACH signal is sent by delay according to an estimated TA error, and indicating the delay information to a UE; and receiving the PRACH signal sent by the UE at a PRACH signal transmission occasion according to an initial TA and the delay information.

Optionally, the delay information for transmitting the PRACH signal includes at least one of: the initial TA minus a TA offset value; a guard interval configured before a random access preamble or CP in a PRACH signal format; a transmission guard interval added before sending the PRACH signal; GT adjustment information due to delayed transmission.

Optionally, the GT adjustment information is: removing a CP part in a PRACH signal format, a length of a newly-added GT, or reserving newly-added guard time required for delayed transmission after the PRACH signal.

Optionally, the method further includes: in a case that signal interference occurs at the UE or between UEs due to delayed transmission of the PRACH signal, instructing a corresponding UE to close a part of continuous PRACH transmission occasions or to close transmission slots of a Physical Uplink Shared Channel (PUSCH) adjacent to PRACH signal transmission occasions.

Optionally, a size of a guard interval or transmission guard interval for delayed transmission of the PRACH signal is determined according to at least one of: user equipment type, user equipment capability, ephemeris algorithm, or accuracy of ephemeris information.

A third aspect of the embodiments of the disclosure provides a UE, including: an instruction receiving module configured to determine delay information for transmitting a PRACH signal based on a system agreement or according to an instruction obtained from a network side device; and a signal transmission module configured to transmit the PRACH signal at a PRACH signal transmission occasion according to a calculated initial TA and the delay information.

A fourth aspect of the embodiments of the disclosure provides a network side device, including: an instruction transmission module configured to determine delay information that a PRACH signal is sent by delay according to a system agreement, or determine delay information that a PRACH signal is sent by delay according to an estimated TA error and indicate the delay information to a UE; and a signal receiving module configured to receive the PRACH signal sent by the UE at a PRACH signal transmission occasion according to an initial TA and the delay information.

A fifth aspect of the embodiments of the disclosure provides a UE, including: a memory and a processor; wherein: the memory is configured to store a computer program; the processor is configured to read the computer program in the memory and perform: determining delay information for transmitting a PRACH signal based on a system agreement or according to an instruction obtained from a network side device; and transmitting the PRACH signal at a PRACH signal transmission occasion according to a calculated initial TA and the delay information.

Optionally, the delay information for transmitting the PRACH signal includes at least one of: the initial TA minus a TA offset value; a guard interval configured before a random access preamble or CP in a PRACH signal format; a transmission guard interval added before transmitting the PRACH signal; or GT adjustment information due to delayed transmission.

Optionally, the GT adjustment information is: removing a CP part in a PRACH signal format, a length of a newly-added GT, or reserving newly-added guard time required for delayed transmission after the PRACH signal.

Optionally, the processor is further configured to: determine a final TA value by subtracting a TA offset value from the initial TA, and transmit the PRACH signal; or transmit the PRACH signal based on a PRACH signal format with a guard interval before a preamble signal or CP and based on a signal time sequence advanced by the initial TA; or add a transmission guard interval based on a signal advanced by the initial TA, and then transmit the PRACH signal.

Optionally, the processor is further configured to: acquire configuration information of a PRACH transmission occasion or transmission slot indicated by the network side device to be closed; stop transmitting the PRACH signal or PUSCH data in the PRACH transmission occasion or transmission slot or an adjacent slot according to the configuration information.

A sixth aspect of the embodiments of the disclosure provides a network side device, including: a memory and a processor; wherein: the memory is configured to store a computer program; the processor is configured to read the computer program in the memory and perform: determining delay information that a PRACH signal is sent by delay according to a system agreement, or determining delay information that a PRACH signal is sent by delay according to an estimated TA error and indicating the delay information to a UE; and receiving the PRACH signal sent by the UE at a PRACH signal transmission occasion according to an initial TA and the delay information.

Optionally, the delay information for transmitting the PRACH signal includes at least one of: the initial TA minus a TA offset value; a guard interval configured before a random access preamble or CP in a PRACH signal format; a transmission guard interval added before transmitting the PRACH signal; or GT adjustment information due to delayed transmission.

Optionally, the GT adjustment information is: removing a CP part in a PRACH signal format, a length of a newly-added GT, or reserving newly-added guard time required for delayed transmission after the PRACH signal.

Optionally, the processor is further configured to: in a case that signal interference occurs at the UE or between UEs due to delayed transmission of the PRACH signal, instruct a corresponding UE to close a part of continuous PRACH transmission occasions or to close transmission slots of a PUSCH adjacent to the PRACH signal transmission occasions.

Optionally, the processor is configured to determine a size of a guard interval or transmission guard interval for delayed transmission of the PRACH signal according to at least one of: user equipment type, user equipment capability, ephemeris algorithm, or accuracy of ephemeris information.

A seventh aspect of the embodiments of the disclosure provides a chip, which is coupled to a memory in a device, so that the chip invokes program instructions stored in the memory when running, to implement the above various aspects of the embodiments of the disclosure and any possible method involved in the various aspects.

An eighth aspect of the embodiments of the disclosure provides a computer readable storage medium storing program instructions, which, when executed on a computer, cause the computer to perform the above various aspects of the embodiments of the disclosure and any possible method involved in the various aspects.

A ninth aspect of the embodiments of the disclosure provides a computer program product which, when running on an electronic device, causes the electronic device to implement the above various aspects of the embodiments of the disclosure and any possible method involved in the various aspects.

The PRACH signal transmission method and device provided in the disclosure have the following beneficial effects.

The network side device estimates the error of the TA calculated by the UE so as to send the indication information to the UE, so that the UE determines the delay information for transmitting the PRACH signal according to the indication information. After receiving the instruction of the network side device, the UE transmits the PRACH signal based on the calculated TA and the delay information for transmitting the PRACH signal determined according to the instruction, so as to solve the problem of interference of the PRACH signal due to the inaccurate TA estimation in the existing PRACH signal transmission method.

### Brief Description of the Drawings

In order to illustrate the technical solutions in the embodiments of the disclosure more clearly, the accompanying figures which need to be used in describing the embodiments will be introduced below briefly. Obviously the accompanying figures described below are only some embodiments of the disclosure, and other accompanying figures can also be obtained by those ordinary skilled in the art according to these accompanying figures without creative labor.
Fig. 1 is a schematic diagram of a PRACH signal format in the related art.
Fig. 2A is a schematic diagram of TA calculation for elbow communication with a reference point on the ground in the related art.
Fig. 2B is a schematic diagram of TA calculation for elbow communication with a reference point at the satellite in the related art.
Fig. 3 is a schematic diagram of PRACH signal transmission between a UE and a satellite in the related art.
Fig. 4 is a schematic diagram of the TA calculation error due to the ephemeris information error in the related art.
Fig. 5 is an architecture schematic diagram of a PRACH signal transmission system provided in an embodiment of the disclosure.
Fig. 6 is a schematic diagram of a PRACH signal transmission method provided in an embodiment of the disclosure.
Fig. 7 is a schematic diagram of a PRACH signal transmission method provided in an embodiment of the disclosure.
Fig. 8 is a schematic diagram of adjusting the PRACH signal transmission mode based on the TA error provided in an embodiment of the disclosure.
Fig. 9 is a schematic diagram of adjusting the PRACH signal transmission mode based on the TA error provided in an embodiment of the disclosure.
Fig. 10 is a schematic diagram of a PRACH signal format including a CP provided in an embodiment of the disclosure.
Fig. 11 is a schematic diagram of a PRACH signal format including no CP provided in an embodiment of the disclosure.
Fig. 12 is a schematic diagram of closing a part of PRACH signal transmission occasions provided in an embodiment of the disclosure.
Fig. 13 is a device schematic diagram of a UE provided in an embodiment of the disclosure.
Fig. 14 is a schematic diagram of a network side device provided in an embodiment of the disclosure.
Fig. 15 is a structural schematic diagram of a UE provided in an embodiment of the disclosure.
Fig. 16 is a structural schematic diagram of a network side device provided in an embodiment of the disclosure.

### Detailed Description of the Embodiments

In order to make the objects, technical solutions and advantages of the disclosure clearer, the disclosure will be further illustrated below in details with reference to the accompanying figures. Obviously the described embodiments are merely a part of the embodiments of the disclosure but not all the embodiments. Based upon the embodiments in the disclosure, all of other embodiments obtained by those ordinary skilled in the art without creative work pertain to the protection scope of the disclosure.

For the sake of understanding, the nouns involved in the embodiments of the disclosure will be explained below.
1) Uplink synchronization: it is required that uplink signals from different UEs at different distances can reach the network side device synchronously. Specifically, the uplink signals sent by UEs in different positions in the same slot in the same cell reach a receiving antenna of the network side device at the same time, that is, the signals of different UEs in the same slot keep synchronized in reaching the receiving antenna of the network side device. The uplink synchronization can reduce uplink multi-access interference and multi-path interference between UEs in a cell and increase the cell capacity and the cell radius.
2) PRACH: in the LTE or 5G NR system, the UE has established the downlink synchronization after a downlink cell search and time-frequency synchronization process, so the UE can receive downlink data, establish a connection with the network side device through a random access process, and obtain the uplink synchronization; the PRACH acts as a bearer channel of random access information, and its main function is to obtain the uplink synchronization and assign a unique identifier to the UE.

In the existing terrestrial mobile communication system, when a terminal initially accesses a cell, it needs to perform downlink cell search and time-frequency synchronization at first, and then send an uplink random access signal (PRACH signal) to perform uplink time-frequency synchronization. Since there are a plurality of UEs competing for access in uplink access, it is necessary to distinguish identifiers (IDs) of different UEs, and a Preamble sequence is usually used as a PRACH signal. The PRACH signal can help the network side device to estimate time and frequency deviations of different UEs. Since a cell radius also varies in actual deployment, the PRACH signal is usually a structure of a Cyclic Prefix (CP) + Preamble, where the Preamble signal can adopt a duplication transmission mode, thereby improving a signal-to-noise ratio of a communication link effectively.

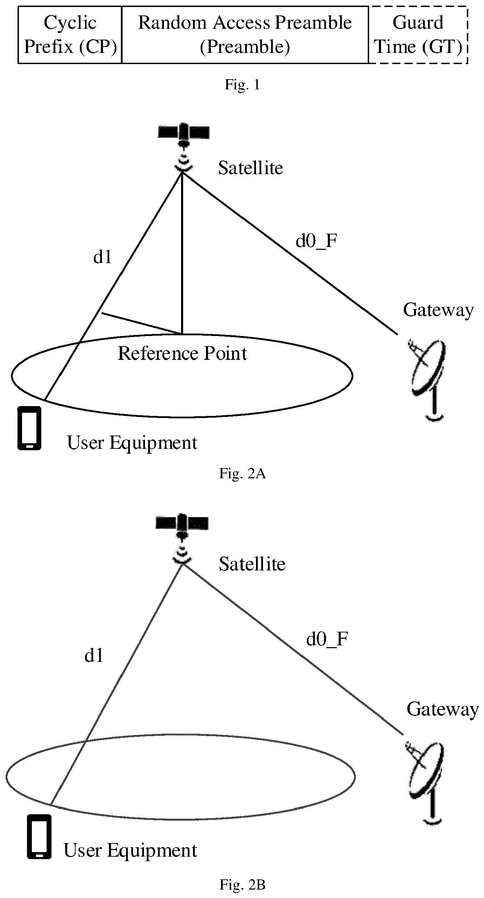

Fig. 1 illustrates a schematic diagram of a PRACH signal format according to an embodiment of the disclosure. As shown, the PRACH signal format includes a CP, a random access preamble (Preamble) signal, and a Guard Time (GT). The CP signal is used to prevent the interference of PRACH signals among UEs. Since the UEs in a cell have different distances from a network side device, the moments at which the UEs send the PRACH signals are different. The CP signal is a part of the Preamble signal. Therefore, a receiving end can still keep the orthogonality of the Preamble signals of the UEs after removing the CP. The Preamble signal in the PRACH signal may be one or more repetitions, depending on application requirements of the UE. The GT is an empty time interval in which no signal is sent, and is to avoid mutual interference between the PRACH signal and data signals of other UEs. Since different UEs send PRACH signals at different time points, a PRACH signal may be delayed and interfere with the subsequent signals. The guard interval of the GT can prevent the PRACH signal from interfering with other signals.

In a satellite communication system, a radius of a cell is generally several hundred kilometers, so a long CP is required according to a traditional PRACH signal structure. In the formulation of satellite standards, an effective design to simplify a PRACH signal format is using a method for obtaining a TA autonomously based on a positioning capability and ephemeris information obtaining capability of a UE. With this method, the UE can perform TA compensation in advance when sending the PRACH signal, without designing a long CP to overcome a propagation delay of a large coverage cell.

Fig. 2A illustrates a schematic diagram of TA calculation for elbow communication with a reference point on the ground in the related art. Fig. 2B illustrates a schematic diagram of TA calculation for elbow communication with a reference point at the satellite in the related art. As shown in Fig. 2A or 2B, in the elbow communication, transmission links are divided into two parts: a transmission link from a UE to a satellite, i.e., a user link or service link, and a transmission link from a satellite to a ground gateway, i.e., a feeder link. A TA reference point may be on the ground or satellite. The TA is also divided into two parts: a user-specific TA (UE Specific TA) and a public TA (Common Reference TA).

The TA compensation includes two methods: partial TA compensation and full TA compensation. In the partial TA compensation method, the user-specific TA is compensated by the UE, and the public TA is compensated by the gateway station. The location of the reference point will affect a relative size of the user-specific TA and the public TA. If the reference point is on the ground, the user-specific TA will be relatively small. If the reference point is on the satellite, the user-specific TA is equal to twice the one-way transmission delay of the user link. As shown in Fig. 2A, when the reference point is on the ground, the public TA=2×(d0+d0_F)/c, and the user-specific TA=2×(d1-d0)/c, where dl is a transmission distance from the UE to the satellite, dl=d0+delta, d0 is a transmission distance from the reference point to the satellite, d0_F is a transmission distance from the gateway to the satellite, and c is a transmission speed of light. As shown in Fig. 2B, when the reference point is on the satellite, the public TA=2×d0_F/c, and the user-specific TA=2×d1/c. In the full TA compensation method, the UE compensates for an entire time difference from the UE to the gateway, including the user link and the feeder link. At this time, the UE needs to compensate for a larger TA, that is, the PRACH signal will be sent in advance by a more amount of time.

In the satellite communication, there is also a regenerative communication mode in addition to the elbow communication mode. In the regenerative communication mode, the satellite is equivalent to a network side device, and the transmission link between the terminal and the satellite is the entire link, so the TA compensation only aims at the transmission link between the terminal and the satellite, i.e., the user link. The principle of TA compensation is similar to that in the elbow communication mode, and there may be two methods: partial TA compensation and full TA compensation, which will not be described in detail herein.

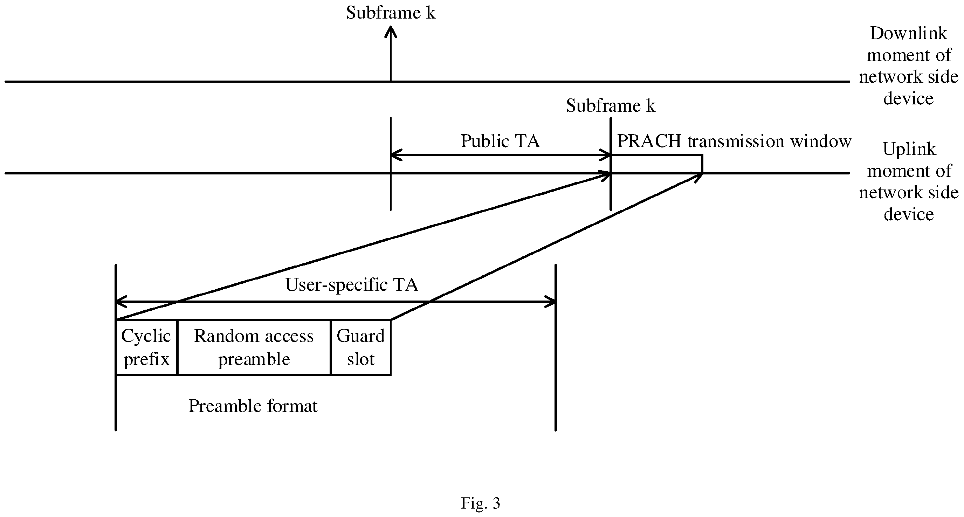

Fig. 3 illustrates a schematic diagram of PRACH signal transmission between a UE and a satellite in the related art. In the partial TA compensation method, when sending a PRACH signal, the UE needs to advance a transmission time interval, which is the user-specific TA. As shown in Fig. 3, the TA is twice the transmission delay corresponding to a difference between a transmission distance from the UE to the satellite and a transmission distance from the satellite to the reference point. At this time, the calculation of a distance from the UE to the satellite depends on the positioning of a UE position and the positioning of a satellite position. The positioning of the UE position is based on the detection of the satellite navigation signal, and the positioning of the satellite position is based on the speculation of the satellite ephemeris information. The ephemeris information includes satellite orbit information, and the UE can calculate a real-time position of the satellite according to the ephemeris information.

In the satellite communication, if the ephemeris information is not updated in time, the errors will occur in the UE's estimation of the satellite orbital position, resulting in the inaccurate TA estimation and thus a time deviation in sending the PRACH signal, so that there is interference between the PRACH signal and other uplink signals, and there is also difficulty in the detection of the network side device.

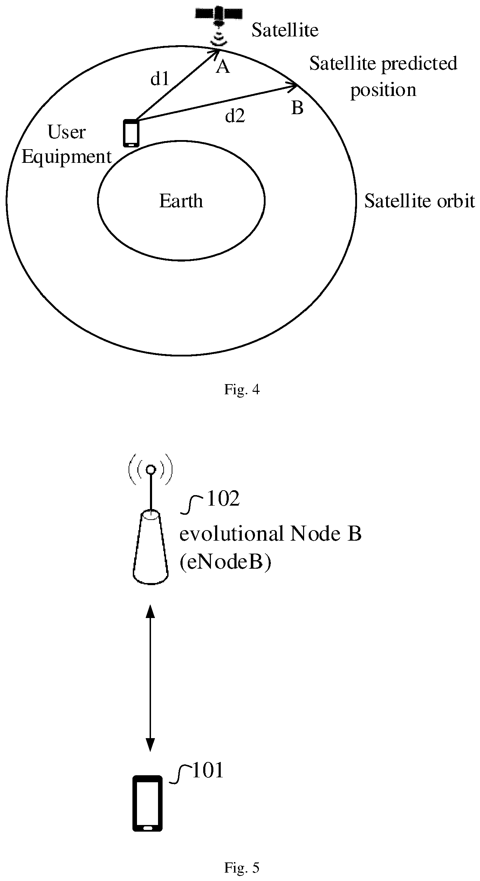

Fig. 4 illustrates a schematic diagram of the TA calculation error due to the ephemeris information error in the related art. As shown, if the UE makes a guess based on the ephemeris information, the UE judges that a distance between the satellite and the UE is d2, while a distance from an actual position of the satellite to the UE is dl, which will cause inaccurate TA estimation and thus cause a problem of sending timing of the PRACH signal.

Since the TA value estimated by the terminal may have a positive deviation or a negative deviation, the transmission occasion of the PRACH signal may be advanced or delayed. If the PRACH signal is sent in advance, the interference will occur between the PRACH signal and the previous uplink signals of other UEs. If the PRACH signal is sent by delay, the interference will occur between the PRACH signal and the later uplink signals of other UEs. Therefore, it is necessary to propose an effective method to solve the problem of signal interference caused by the TA estimation error of the UE.

In view of this, the embodiments of the disclosure propose a PRACH signal transmission method and device, which are applied to a scenario where a UE and a network side device establish uplink synchronization. When transmitting the PRACH signal based on the TA estimated by the UE at present, it is delayed or advanced by a time interval to ensure that the GT value of the PRACH signal is within a reasonable range and the PRACH signal will not interfere with the uplink signals of other UEs.

Fig. 5 illustrates an architecture schematic diagram of a PRACH signal transmission system provided in an embodiment of the disclosure. As shown, the PRACH signal transmission system provided by the embodiment of the disclosure includes: a UE 101 configured to determine delay information for transmitting a PRACH signal based on a system agreement or according to an instruction obtained from a network side device; and transmit the PRACH signal at a PRACH signal transmission occasion according to a calculated initial TA and the delay information; and a network side device 102 configured to determine the delay information that the PRACH signal is sent by delay according to a system agreement, or determine the delay information that the PRACH signal is sent by delay according to an estimated TA error and indicate the delay information to the UE; and receive the PRACH signal sent by the UE at the PRACH signal transmission occasion according to the initial TA and the delay information.

In the embodiments of the disclosure, the UE may specifically refer to an access terminal, a user unit, a user station, a mobile radio station, a mobile station, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a vehicle-carried device, a wearable device, a mobile station in the 5G network, or a subscription device in the future evolved Public Land Mobile Network (PLMN) network, etc.

The network side device may be a generation Node B (gNB) in the 5G system, or may be a Base Transceiver Station (BTS) in the Global System of Mobile communication (GSM) system or Code Division Multiple Access (CDMA), or may be a NodeB (NB) in the Wideband Code Division Multiple Access (WCDMA) system, or may be an evolutional Node B (eNB or eNodeB) in the LTE system, etc.

For the convenience of description, Fig. 5 only illustrates one UE. In an actual system, multiple UEs may coexist, which will not be repeated herein. It should be noted that the foregoing system architecture is only an example of the system architecture applicable to the embodiments of the disclosure. Compared with the system architecture shown in Fig. 5, the system architecture applicable to the embodiments of the disclosure can also add other entities or reduce some entities.

### Embodiment 1.

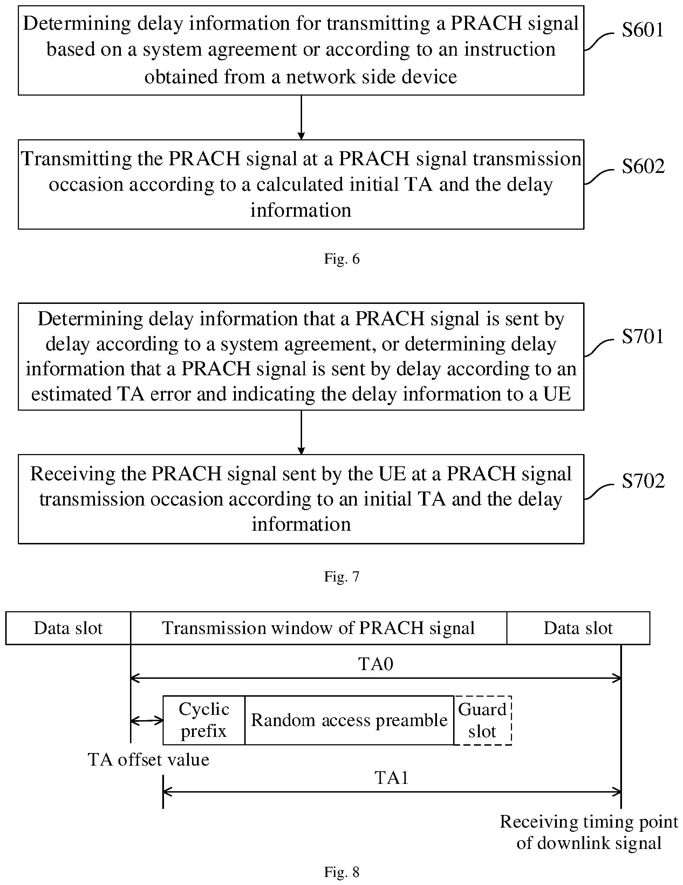

An embodiment of the disclosure provides a PRACH signal transmission method, which is applied to a UE. As shown in Fig. 6, the method includes S601 and S602.

S601: determining delay information for transmitting a PRACH signal based on a system agreement or according to an instruction obtained from a network side device.

After the UE is connected to the network side device and establishes downlink synchronization, the UE needs to send a PRACH signal to the network side device to establish uplink synchronization. Before sending the PRACH signal, the UE receives a downlink signal sent by the network side device, obtains a timing starting point of a signal subframe or slot of a downlink received signal as a receiving timing point of a downlink signal based on the detection of the downlink signal, and sends the PRACH signal in advance of TA with the receiving timing point as a reference.

Specifically, the UE obtains a UE position based on a satellite navigation signal, obtains a satellite orbit position based on ephemeris information, and calculates the initial TA based on reference point information, which may be predefined by the system or notified by the network side device. At the same time, the delay information for transmitting the PRACH signal is determined based on a system agreement or according to an instruction obtained from the network side device. The system agreement means that a time interval or guard interval by which the PRACH signal needs to be sent by delay is pre-appointed in the standard protocol, including TA adjustment or delayed transmission interval or guard interval, etc. This configuration information is predetermined in the protocol. The terminal obeys these rules when sending the PRACH signal to achieve the desired goal, and there is no need for the network side device to notify the terminal through a signaling message; if the notification from the network side device is adopted, it means that the network side device, such as a base station, can change the indication information for delayed transmission through an air interface message. According to the calculated initial TA and the delay information for transmitting the PRACH signal, the PRACH signal is sent at the transmission occasion of the PRACH signal.

When the UE calculates the initial TA, it is determined by the above method for obtaining the TA autonomously. The specific implementation is the same as the above description in this embodiment, which is not repeated herein.

S602: transmitting the PRACH signal at a PRACH signal transmission occasion according to a calculated initial TA and the delay information.

When sending the PRACH signal after determining the calculated initial TA and the delay information for transmitting the PRACH signal through the above method, the UE subtracts one TA offset value from the initial TA as a final TA value according to the delay information and sends the PRACH signal; or sends the PRACH signal based on a PRACH signal format with a guard interval before a preamble signal or CP and based on a signal time sequence advanced by the initial TA; or adds a transmission guard interval based on a signal advanced by the initial TA, and then sends the PRACH signal. In a specific implementation, there are possible modes for the delay information for transmitting the PRACH signal.

The above-mentioned delay information for transmitting the PRACH signal is used to perform error compensation on the TA calculated by the UE, and the specific indication mode can be selected according to requirements. Several optional implementations of the delay information for transmitting the PRACH signal are given below.

### 1) The initial TA minus one TA offset value.

When the delay information for transmitting the PRACH signal determined by the UE is the initial TA minus one TA offset value, the estimated initial TA value needs to be adjusted. The initial TA value calculated by the terminal may be larger or smaller than the actual TA value. If larger, the PRACH signal may be advanced too much, causing the PRACH signal to interfere with signals of other UEs, so the PRACH signal needs to be delayed for transmission. Since the network side device does not know whether the TA value estimated by the UE is larger or smaller, a simple and effective method is to send the PRACH signal in delay. By taking the receiving timing point of the downlink signal as a reference, the time after the initial TA minus the TA offset value is advanced, and the PRACH signal is sent at the PRACH signal transmission occasion indicated by the network side device. By subtracting an offset value, the actually used TA is made smaller than the estimated initial TA, so as to achieve the purpose of delayed transmission.

### 2) A guard interval configured before a random access preamble or CP in the PRACH signal format.

The delay information for transmitting the PRACH signal determined by the UE is: when a guard interval is configured before the random access preamble in the PRACH signal format, the UE configures a guard interval before the Preamble in the currently-sent PRACH signal format according to the delay information, then advances the initial TA by taking the receiving timing point of the downlink signal as a reference, and sends the PRACH signal at the PRACH signal transmission occasion indicated by the network side device according to the PRACH signal format with the guard interval.

The delay information for transmitting the PRACH signal determined by the UE is: when a guard interval is configured before the CP in the PRACH signal format, the UE configures a guard interval before the CP in the currently-sent PRACH signal format according to the delay information, then advances the initial TA by taking the receiving timing point of the downlink signal as a reference, and sends the PRACH signal at the PRACH signal transmission occasion indicated by the network side device according to the PRACH signal format with the guard interval.

When receiving the notification from the network side device and determines the above delay information for transmitting the PRACH signal, the UE may receive the guard interval added before the Preamble or CP indicated by the network side device, or may receive the PRACH signal format added with the guard interval indicated by the network side device.

### 3) A transmission guard interval added before transmitting the PRACH signal.

The delay information for transmitting the PRACH signal determined by the UE is: when the transmission guard interval is added before sending the PRACH signal, the initial TA is advanced by taking the receiving timing point of the downlink signal as a reference, and the PRACH signal is sent with a backward delay after the transmission guard interval is added before sending the PRACH signal within the sending window corresponding to the PRACH signal transmission occasion configured by the network side device.

### 4) GT adjustment information due to delayed transmission.

The UE determines the GT adjustment information due to delayed transmission according to an instruction from the network side, and sends the PRACH signal after adjusting the PRACH signal.

The GT adjustment information is: removing a CP part in the PRACH signal format, a length of a newly-added GT, or reserving newly-added guard time required for delayed transmission after the PRACH signal.

The delay information for transmitting the PRACH signal determined by the UE is removing the CP part in the PRACH signal format. Then the UE removes the CP in the PRACH signal format as the time interval of the TA offset value, where the TA offset value may be equal to the CP length at most, thus guaranteeing the length of the extended GT. Then, the UE advances the initial TA by taking the receiving timing point of the downlink signal as a reference, and sends the PRACH signal with the CP removed at the PRACH signal transmission occasion indicated by the network side device according to the PRACH signal format with the CP removed.

If the GT adjustment information is the length of the newly-added GT, the UE advances the initial TA and determines the current GT by taking the receiving timing point of the downlink signal as a reference, adjusts the current GT according to the length of the newly-added GT, and sends the PRACH signal at the PRACH signal transmission occasion.

If the GT adjustment information is reserving the newly-added guard time required for delayed transmission after the PRACH signal, the UE reserves the newly-added guard time required for delayed transmission after the PRACH signal according to the adjustment information, determines the moment to start sending the PRACH, and sends the PRACH signal at the PRACH signal transmission occasion indicated by the network side device when the moment to start sending the PRACH is reached.

Further, the UE obtains the configuration information of the PRACH transmission occasion or transmission slot indicated by the network side device to be closed, and stops sending the PRACH signal or PUSCH data in the corresponding PRACH transmission occasion or transmission slot or an adjacent slot according to the configuration information, to avoid interference with other signals.

An embodiment of the disclosure further provides a PRACH signal transmission method, which is applied to a network side device. As shown in Figure 7, the method includes S701 and S702.

S701: determining the delay information that a PRACH signal is sent by delay according to a system agreement, or determining the delay information that a PRACH signal is sent by delay according to an estimated TA error and indicating the delay information to a UE.

After the UE is connected to the network side device and establishes downlink synchronization, the network side device may perform corresponding configuration for the PRACH signal sent by the UE and then receive the PRACH signal sent by the UE to establish uplink synchronization.

When configuring the PRACH signal, the network side device determines the compensation information for the TA error according to the estimated TA error, and sends the indication information to the UE, so that the UE determines the delay information for transmitting the PRACH signal according to the indication information. In this embodiment, the delay information for transmitting the PRACH signal is as described above, and may be at least one of: the initial TA minus a TA offset value; a guard interval configured before a random access preamble or CP in a PRACH signal format; a transmission guard interval added before sending the PRACH signal; or GT adjustment information due to delayed transmission.

Specifically, the size of a guard interval or transmission guard interval for delayed transmission of the PRACH signal is determined according to at least one of: user equipment type, user equipment capability, ephemeris algorithm, or accuracy of ephemeris information.

The UE calculates the TA according to the ephemeris information, and the update time of the ephemeris information is different and the accuracy is also different. Specifically, the longer the update time of the ephemeris information is, the lower the accuracy is. Thus, the greater the TA error calculated by the terminal is, the larger the guard interval or transmission guard interval required for delayed transmission of the PRACH signal is. At the same time, when obtaining the ephemeris information and calculating the TA according to the ephemeris information, the UE may be affected by its own capabilities, so the TA values calculated by different types of UEs or UEs with different capabilities are also different. In addition, the ephemeris information determined by different ephemeris algorithms are not completely the same, so the ephemeris algorithm used by the UE to calculate the TA will also affect the accuracy of the TA.

Thus, the network side device may estimate the TA error calculated by the UE according to at least one of the user equipment type, the user equipment capability, the ephemeris algorithm or the accuracy of the ephemeris information, and determine any one of the above delay information for transmitting the PRACH signal and indicate the determined delay information to the terminal.

For example, the errors in TA calculation for different types of UEs may be estimated respectively, and the correspondence between different types of UEs and guard intervals or transmission guard intervals for delayed transmission of PRACH signals may be preset according to the estimation results. When indicating the delay information for transmitting the PRACH signal to the UE, the size of the guard interval or transmission guard interval for delayed transmission of the PRACH signal corresponding to the UE is determined according to the correspondence and then indicated to the corresponding UE.

When the network side device instructs the UE to add a guard interval in the PRACH signal, the network side device may separately indicate the guard interval added before the Preamble or CP, or may indicate the PRACH signal format added with the guard interval.

The network side device uses the determined guard interval or transmission guard interval for delayed transmission of the PRACH signal as the transmission guard interval added before sending the PRACH signal and indicates the determined guard interval or transmission guard interval for delayed transmission of the PRACH signal to the corresponding UE, so that the UE advances the initial TA by taking the receiving timing point of the downlink signal as a reference according to the indication, and sends the PRACH signal with a backward delay after the transmission guard interval is added before sending the PRACH signal within the sending window corresponding to the PRACH signal transmission occasion configured by the network side device.

The network side device uses the determined guard interval or transmission guard interval for delayed transmission of the PRACH signal as the GT adjustment information due to delayed transmission and indicates the determined guard interval or transmission guard interval for delayed transmission of the PRACH signal to the corresponding UE, where the GT adjustment information may be: removing a CP part in the PRACH signal format, a length of a newly-added GT, or reserving the newly-added guard time required for delayed transmission after the PRACH signal.

Further, when determining that the signal interference occurs at the UE itself or between UEs due to delayed transmission of the PRACH signal, the network side device instructs the corresponding UE to close a part of continuous PRACH transmission occasions or close transmission slots of a PUSCH adjacent to the PRACH signal transmission occasions, so as to ensure that the UE will not interfere with other signals when transmitting the PRACH signal.

Step S702: receiving the PRACH signal sent by the UE at a PRACH signal transmission occasion according to an initial TA and the delay information.

After performing the delayed transmission configuration on the PRACH signal sent by the UE in the above manner and indicating the delayed transmission configuration to the corresponding UE, the network side device determines the detection time of the PRACH signal based on the delayed transmission configuration, and receives the PRACH signal sent by the UE, thereby further establishing the uplink synchronization.

The possible embodiments of the PRACH signal transmission method performed by the network side device and the UE are given below with reference to the schematic diagrams.

### Implementation 1.

After a UE is connected to a network side device and establishes downlink synchronization, the UE receives a downlink signal sent by the network side device, obtains a timing starting point of a signal subframe or slot of a downlink received signal as a receiving timing point of the downlink signal, and sends a PRACH signal in advance of TA with the receiving timing point as a reference.

Fig. 8 illustrates a schematic diagram of adjusting a PRACH signal transmission mode based on a TA error provided in an embodiment of the disclosure. The UE obtains a UE position based on a satellite navigation signal, obtains a satellite orbit position based on ephemeris information, and calculates an initial TA=TA0 based on reference point information, where the reference point information may be predefined or notified by a network. According to an instruction from the network side device, a TA offset value TA_offset is subtracted from the TA to calculate a final timing advance value TA1=TA0-TA_offset. When the PRACH signal is sent, the TA1 is used as an actual timing advance amount, and the PRACH signal is sent in advance of TA1 with the receiving timing point obtained above as a reference.

In this embodiment, when calculating the initial timing advance TA0 based on the reference point information, TA0 is determined by using the above-mentioned method for obtaining the TA autonomously.

As shown in Fig. 8, when the PRACH signal contains a CP, the CP is used to protect transmission lag of the PRACH signal. In order to protect an error caused by the ephemeris information, when the PRACH signal is sent in advance of TA0, the time of, for example, 1/2 CP may be delayed, that is, the network side device sets a TA offset value subtracted from the TA as TA_offset=1/2CP and indicates the TA_offset to the UE, and the UE sends the PRACH signal with a delay of 1/2CP on the basis of TA0 according to the instruction of the network side device, to overcome the error caused by the rather large TA calculation.

Since a GT length in the current PRACH signal format is generally equal to the CP length, the PRACH signal is sent with a delay of 1/2CP when the TA_offset value is set as 1/2CP, so that an effective length of the GT becomes 1/2CP, so a tolerable TA error is +/- 1/2CP. When the length of the GT is not enough to protect the TA error caused by the relatively large deviation of the ephemeris information, the length of the GT needs to be extended to overcome the error caused by the rather small calculated value of the TA. Specifically, any of the following methods can be used.

### 1) Close a part of PRACH signal transmission occasions or close a transmission slot corresponding to PUSCH.

When there is a continuous PRACH signal transmission configuration in the existing PRACH signal transmission configurations, the network side device closes a part of the continuous PRACH signal transmission occasions, or when there is no continuous PRACH signal transmission configuration in the existing PRACH signal transmission configurations, the network side device closes the slot corresponding to the intermediate PUSCH scheduling opportunity, and indicates a transmission occasion to the corresponding UE. The UE sends the PRACH signal in the above manner through the transmission occasion indicated by the network side device. The specific embodiment is the same as the description in Implementation 3 below, and will not be repeated herein.

### 2) Remove a CP part in the PRACH signal format as a time interval of the TA offset value TA_offset.

The network side device instructs the UE to remove the CP part in the PRACH signal format when sending the PRACH signal, and indicates the set value of the TA offset value TA_offset to the UE. The UE removes the CP part in the PRACH signal format according to the instruction from the network side device, and delays the time interval of TA_offset on the basis of the above TA0, that is, sends the PRACH signal with the CP removed in advance of TA1=TA0-TA_offset by taking the receiving timing point as a reference, where the TA offset value indicated by the network side device may be equal to the CP length at most, thereby ensuring that the effective length of the GT in the PRACH signal format will not be reduced or the effective length of the GT can be increased. Therefore, when the PRACH signal is sent with a delay of the TA offset value to protect the error caused by the rather large TA calculation, the protection of the GT for the error caused by the rather small TA calculation will not be affected.

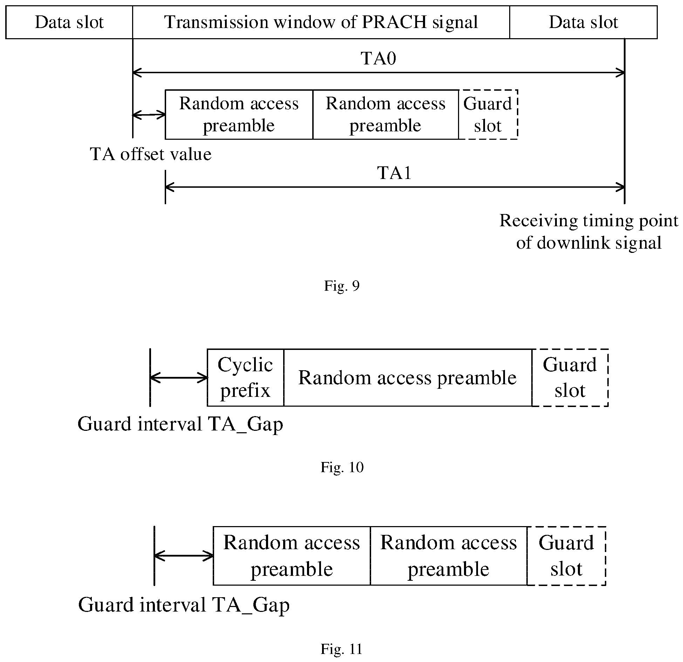

Fig. 9 illustrates a schematic diagram of adjusting the PRACH signal transmission mode based on the TA error provided in an embodiment of the disclosure. When there is no CP in the PRACH signal format, in order to protect the error caused by the ephemeris information, the TA offset value TA_offset may be delayed when the PRACH signal is sent in advance of TA0. At the same time, in order to prevent the PRACH signal from interfering with other uplink signals, the length of the GT needs to be at least equal to TA_offset. The value of TA_offset needs to be set to tolerate the TA offset caused by the sum of the maximum ephemeris information error and the maximum UE positioning error.

### Implementation 2.

After a UE is connected to a network side device and establishes downlink synchronization, the UE receives a downlink signal sent by the network side device, obtains the timing starting point of the signal subframe or slot of the downlink received signal as the receiving timing point of the downlink signal, and sends a PRACH signal in advance of TA with the receiving timing point as a reference.

Specifically, the UE calculates the initial TA=TA0 by using the same method as the above Implementation 1, which will not be repeated herein.

Fig. 10 illustrates a schematic diagram of a PRACH signal format including a CP provided in an embodiment of the disclosure. Fig. 11 illustrates a schematic diagram of a PRACH signal format including no CP provided in an embodiment of the disclosure. As shown in Fig. 10 or Fig. 11, TA_Gap is a transmission guard interval added to the PRACH signal format. When the PRACH signal includes a CP, the transmission guard interval TA_Gap is added before the CP; when the PRACH signal contains no CP, the transmission guard interval TA_Gap is added before the Preamble. After the transmission guard interval TA_Gap is added, the actual sending time of the valid signal part in the PRACH signal will be delayed by a time value corresponding to TA_Gap, thus preventing the signal interference caused by the calculated TA value larger than the actual required TA value. At the same time, due to the existence of the GT, the signal interference caused by the calculated TA value smaller than the actual required TA value can be prevented.

The value of the above TA_Gap is determined by the network side device and indicated to the UE. When sending the PRACH signal, the UE sends the PRACH signal with the above guard interval TA_Gap added in advance of TA0 by taking the receiving timing point as a reference. In the above method, the guard interval is directly added in the PRACH signal format by considering the TA error in the PRACH signal format, so that the added guard interval becomes a part of the PRACH signal, so there is no need to modify the existing TA calculation method.

### Implementation 3.

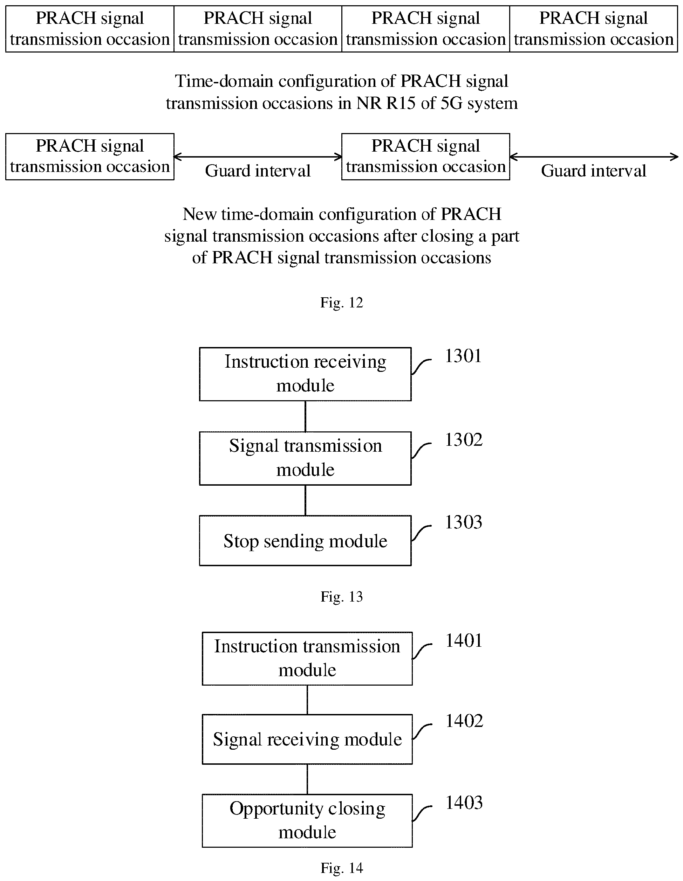

Fig. 12 illustrates a schematic diagram of closing a part of PRACH signal transmission occasions provided in an embodiment of the disclosure. In a 5G or LTE system, there is a time-domain configuration of continuous PRACH signal transmission occasions. When the TA calculated and determined by the UE is compensated and the PRACH signal is sent with a delay of the TA offset value TA_offset on the basis of TA0, the length of the GT may become insufficient, affecting the subsequent signal transmission. Therefore, in order to ensure that the transmission of the PRACH signal will not interfere with the subsequent signals, if there is a PRACH signal transmission occasion after the PRACH signal transmission occasion, i.e., the PRACH signal transmission occasion, it is necessary to close the PRACH signal transmission occasion after the PRACH signal transmission occasion; if there is no PRACH signal transmission occasion after the PRACH signal transmission occasion, the transmission slot of the PUSCH adjacent to the PRACH signal transmission occasion is closed, to obtain a sparse slot configuration of the PRACH signal transmission occasion to prevent the signal interference. As shown in Fig. 12, the slot corresponding to the closed PRACH signal transmission occasion may be used as a guard interval or a guard slot, so as to avoid the signal interference caused by the insufficient length of the GT in the PRACH signal.

For example, if a transmission slot corresponding to a PRACH signal includes 6 PRACH signal transmission occasions, and if 3 PRACH signal transmission occasions are closed at intervals, so that there are 3 PRACH signal transmission occasions in one transmission slot, and thus the PRACH signal transmission occasions may be more sparse. The slot corresponding to the closed PRACH signal transmission occasion is used as a guard slot, increasing the guard interval of the GT indirectly and avoiding interference between the PRACH signal and the following signals.

### Implementation 4.

After a UE is connected to a network side device and establishes downlink synchronization, the UE receives a downlink signal sent by the network side device, obtains the timing starting point of the signal subframe or slot of the downlink received signal as the receiving timing point of the downlink signal, and sends a PRACH signal in advance of TA with the receiving timing point as a reference. When the determined TA is smaller than the actual TA value so that the length of the GT is not enough to protect the larger TA error, the length of the GT needs to be extended.

Specifically, the GT adjustment information due to delayed transmission may be sent by the network side device to the UE, and the GT adjustment information may be: removing a CP part in the PRACH signal format, a length of a newly-added GT, or reserving the newly-added guard time required for delayed transmission after the PRACH signal.

For example, the network side device instructs the UE to remove the CP part in the PRACH signal format or add the length of the GT newly when sending the PRACH signal, so that the effective length of the GT part in the PRACH signal format can be increased. The UE sends the PRACH signal in the PRACH signal format with the CP removed or with the newly-added GT length, thereby ensuring that the GT in the PRACH signal has a sufficient length to protect the error caused by the calculated value of the TA smaller than the actual value. Alternatively, the network side device instructs the UE to reserve the newly-added guard time required for delayed transmission after the PRACH signal, and the effective length of the GT is indirectly extended through the newly-added guard time. The UE reserves the newly-added guard time required for delayed transmission after the PRACH signal according to the instruction of the adjustment information, determines the moment to start sending the PRACH, and sends the PRACH signal at the PRACH signal transmission occasion indicated by the network side device when the moment to start sending the PRACH is reached, which can also ensure the protection of the GT against the error caused by the calculated value of the TA smaller than the actual value.

In the above PRACH signal transmission method provided in the embodiment of the disclosure, the network side device estimates the error of the TA calculated by the UE to thereby determine the size of the guard interval or transmission guard interval for delayed transmission of the PRACH signal, so as to provide the indication information to the UE, so that the UE determines the delay information for transmitting the PRACH signal according to the indication information. After receiving the indication from the network side device, the UE adjusts the time for transmitting the PRACH signal or the format of the PRACH signal according to the indication information, and transmits the PRACH signal based on the calculated TA, solving the problem of interference of the PRACH signal in the case when the TA estimation is inaccurate in the existing PRACH signal transmission method.

### Embodiment 2.

The PRACH signal transmission method in the disclosure has been described above, and a device for executing the above PRACH signal transmission method will be described below.

Fig. 13 provides a UE according to an embodiment of the disclosure, including: an instruction receiving module 1301 configured to determine delay information for transmitting a PRACH signal based on a system agreement or according to an instruction obtained from a network side device; and a signal transmission module 1302 configured to transmit the PRACH signal at a PRACH signal transmission occasion according to a calculated initial TA and the delay information.

Optionally, the delay information for transmitting the PRACH signal is at least one of: the initial TA minus a TA offset value; a guard interval configured before a random access preamble or CP in a PRACH signal format; a transmission guard interval added before sending the PRACH signal; or GT adjustment information due to delayed transmission.

Optionally, the GT adjustment information is: removing a CP part in the PRACH signal format, a length of a newly-added GT, or reserving newly-added guard time required for delayed transmission after the PRACH signal.

Optionally, when sending the PRACH signal at the PRACH signal transmission occasion, the signal transmission module is configured to: Determine a final TA value by subtracting a TA offset value from the initial TA, and transmit the PRACH signal; or transmit the PRACH signal based on a PRACH signal format with a guard interval before a preamble signal or CP and based on a signal time sequence advanced by the initial TA; or add a transmission guard interval based on a signal advanced by the initial TA, and then transmit the PRACH signal.

Optionally, the UE further includes a stop sending module 1303, which is specifically configured to: acquire configuration information of a PRACH transmission occasion or transmission slot indicated by the network side device to be closed; and stop transmitting the PRACH signal or PUSCH data in the corresponding PRACH transmission occasion or transmission slot or an adjacent slot according to the configuration information.

The above UE provided by the embodiment of the disclosure and the PRACH signal transmission method applied to the UE provided by the above Embodiment 1 of the disclosure belong to the same inventive concept, and various implementations applied to the UE provided in the above Embodiment 1 may be applied to the UE in this embodiment for implementation, which will not be repeated herein.

Referring to Fig. 14, an embodiment of the disclosure provides a network side device, including: an instruction transmission module 1401 configured to determine delay information that a PRACH signal is sent by delay according to a system agreement, or determine delay information that a PRACH signal is sent by delay according to an estimated TA error and indicate the delay information to a UE; and a signal receiving module 1402 configured to receive the PRACH signal sent by the UE at a PRACH signal transmission occasion according to an initial TA and the delay information.

Optionally, the delay information for transmitting the PRACH signal includes at least one of: the initial TA minus a TA offset value; a guard interval configured before a random access preamble or CP in a PRACH signal format; a transmission guard interval added before transmitting the PRACH signal; or GT adjustment information due to delayed transmission.

Optionally, the GT adjustment information is: removing a CP part in the PRACH signal format, a length of a newly-added GT, or reserving newly-added guard time required for delayed transmission after the PRACH signal.

Optionally, the network side device further includes an opportunity closing module 1403, which is specifically configured to: in a case that signal interference occurs at the UE or between UEs due to delayed transmission of the PRACH signal, instructing a corresponding UE to close a part of continuous PRACH transmission occasions or to close transmission slots of a PUSCH adjacent to PRACH signal transmission occasions.

Optionally, the instruction transmission module is configured to determine a size of a guard interval or transmission guard interval for delayed transmission of the PRACH signal according to at least one of: user equipment type, user equipment capability, ephemeris algorithm, or accuracy of ephemeris information.

The above network side device provided by the embodiment of the disclosure and the PRACH signal transmission method applied to the network side device provided by the above Embodiment 1 of the disclosure belong to the same inventive concept, and various implementations applied to the network side device provided in the above Embodiment 1 may be applied to the network side device in this embodiment for implementation, which will not be repeated here.

The UE and the network side device in the embodiment of the disclosure have been described above from the perspective of modular functional entity, and the UE and the network side device in the embodiment of the disclosure will be described below from the perspective of hardware processing.

### Embodiment 3.

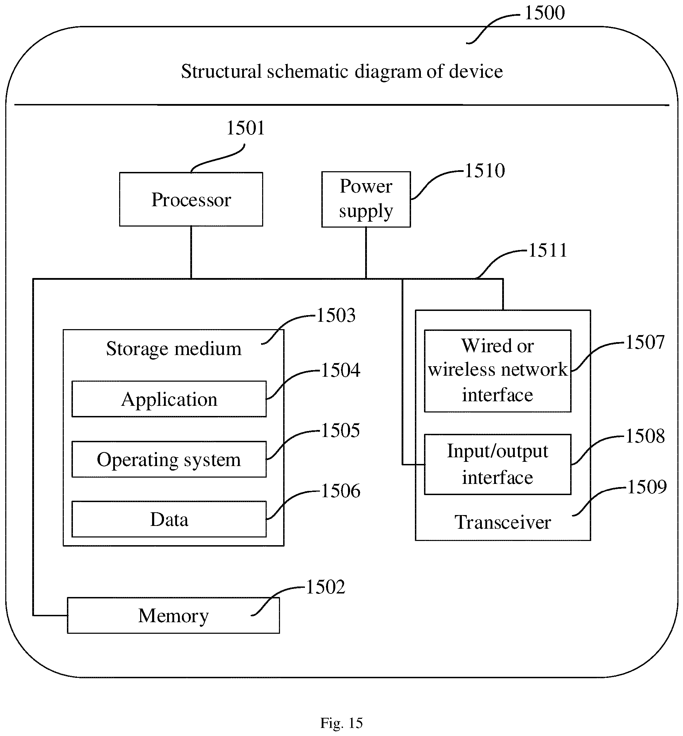

Referring to Fig. 15, another embodiment of the UE in the embodiment of the disclosure includes: a processor 1501, a memory 1502, a transceiver 1509 and a bus system 1511; the memory 1502 is configured to store a program; the processor 1501 is configured to execute the program in the memory 1502, including the following operations: determining delay information for transmitting a PRACH signal based on a system agreement or according to an instruction obtained from a network side device; and transmitting the PRACH signal at a PRACH signal transmission occasion according to a calculated initial TA and the delay information.

Fig. 15 is a structural schematic diagram of a device for automatic matching of service data provided by an embodiment of the disclosure. The device 1500 may vary greatly due to different configurations or performance, and may include one or more Central Processing Units (CPUs) 1501 (for example, one or more processors, a memory 1502, and one or more storage media 1503 (for example, one or more mass storage devices) storing applications 1504 or data 1506, where the memory 1502 and the storage media 1503 may be short-term storage or persistent storage. The program stored in the storage medium 1503 may include one or more modules (not shown in the figure), and each module may include a series of instruction operations for the information processing apparatus. Further, the processor 1501 may be configured to communicate with the storage medium 1503 to execute a series of instruction operations in the storage medium 1503 on the device 1500.

The device 1500 may further include one or more power supplies 1510, one or more wired or wireless network interfaces 1507, one or more input/output interfaces 1508, and/or one or more operating systems 1505, such as Windows Server, Mac OS X, Unix, Linux, FreeBSD, etc.

Optionally, the delay information for transmitting the PRACH signal inludes at least one of: the initial TA minus a TA offset value; a guard interval configured before a random access preamble or CP in a PRACH signal format; a transmission guard interval added before transmitting the PRACH signal; or GT adjustment information due to delayed transmission.

Optionally, the GT adjustment information is: removing a CP part in the PRACH signal format, a length of a newly-added GT, or reserving newly-added guard time required for delayed transmission after the PRACH signal.

Optionally, the processor 1501 is specifically configured to: determine a final TA value by subtracting a TA offset value from the initial TA, and transmit the PRACH signal; or transmit the PRACH signal based on a PRACH signal format with a guard interval before a preamble signal or CP and based on a signal time sequence advanced by the initial TA; or add a transmission guard interval based on a signal advanced by the initial TA, and then transmit the PRACH signal.

Optionally, the processor 1501 is further configured to: acquire configuration information of a PRACH transmission occasion or transmission slot indicated by the network side device to be closed; stop transmitting the PRACH signal or PUSCH data in the corresponding PRACH transmission occasion or transmission slot or an adjacent slot according to the configuration information.

The above UE provided by the embodiment of the disclosure and the UE provided by the above Embodiment 2 of the disclosure belong to the same inventive concept, and various implementations applied to the UE provided in the above Embodiment 2 may be applied to the UE in this embodiment for implementation, which will not be repeated herein.

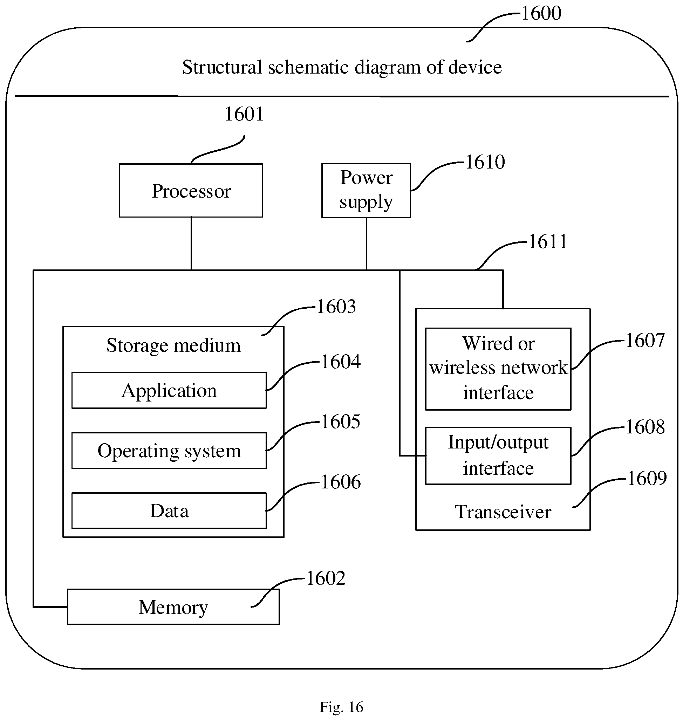

Referring to Fig. 16, another embodiment of the network side device in the embodiment of the disclosure includes: a processor 1601, a memory 1602, a transceiver 1609 and a bus system 1611; the memory 1602 is configured to store a program; the processor 1601 is configured to execute the program in the memory, including the following steps: determining delay information that a PRACH signal is sent by delay according to a system agreement, or determining delay information that a PRACH signal is sent by delay according to an estimated TA error and indicating the delay information to a UE; and receiving the PRACH signal sent by the UE at a PRACH signal transmission occasion according to an initial TA and the delay information.

Fig. 16 is a structural schematic diagram of a device for automatic matching of service data provided by an embodiment of the disclosure. The device 1600 may vary greatly due to different configurations or performance, and may include one or more CPUs 1601 (for example, one or more processors, a memory 1602, and one or more storage media 1603 (for example, one or more mass storage devices) storing applications 1604 or data 1606, where the memory 1602 and the storage media 1603 may be short-term storage or persistent storage. The program stored in the storage medium 1603 may include one or more modules (not shown in the figure), and each module may include a series of instruction operations for the information processing apparatus. Further, the processor 1601 may be configured to communicate with the storage medium 1603 to execute a series of instruction operations in the storage medium 1603 on the device 1600.

The device 1600 may further include one or more power supplies 1610, one or more wired or wireless network interfaces 1607, one or more input/output interfaces 1608, and/or one or more operating systems 1605, such as Windows Server, Mac OS X, Unix, Linux, FreeBSD, etc.

Optionally, the delay information for transmitting the PRACH signal includes at least one of: the initial TA minus a TA offset value; a guard interval configured before a random access preamble or CP in a PRACH signal format; a transmission guard interval added before transmitting the PRACH signal; or GT adjustment information due to delayed transmission.

Optionally, the GT adjustment information is: removing a CP part in the PRACH signal format, a length of a newly-added GT, or reserving newly-added guard time required for delayed transmission after the PRACH signal.

Optionally, the processor 1601 is further configured to: in a case that signal interference occurs at the UE or between UEs due to delayed transmission of the PRACH signal, instruct a corresponding UE to close a part of continuous PRACH transmission occasions or to close transmission slots of a PUSCH adjacent to the PRACH signal transmission occasions.

Optionally, the processor 1601 is configured to determine a size of a guard interval or transmission guard interval for delayed transmission of the PRACH signal according to at least one of: user equipment type, user equipment capability, ephemeris algorithm, or accuracy of ephemeris information.

The above network side device provided by the embodiment of the disclosure and the network side device provided by the above Embodiment 2 of the disclosure belong to the same inventive concept, and various implementations applied to the network side device provided in the above Embodiment 2 may be applied to the network side device in this embodiment for implementation, which will not be repeated herein.

An embodiment of the disclosure further provides a computer readable storage medium including instructions, which, when executed on a computer, cause the computer to execute the PRACH signal transmission method provided by the above-mentioned embodiments.

As can be understood clearly by those skilled in the art, for the convenience and simplicity of description, the specific working processes of the above-mentioned devices and modules can refer to the corresponding processes in the method embodiments described above, and the detailed description thereof will be omitted here.

In the several embodiments provided by the disclosure, it should be understood that the disclosed system, devices and methods may be implemented in other manners. For example, the device embodiments described above are only schematic, for example, the division of the modules is merely a logical function division. In an actual implementation, there may be other division manners, for example, a plurality of modules or components may be combined or integrated to another system, or some features may be ignored or not performed. In addition, the displayed or discussed mutual coupling or direct coupling or communication connection may be implemented through the indirect coupling or communication connection between some interfaces, devices or modules, and may be in the electrical or other forms.

The modules described as separate components may or may not be physically separated, and the components displayed as modules may or may not be physical modules, that is, may be located in one place or may be distributed onto multiple network modules. Some or all of the modules may be selected according to the actual needs to achieve the objects of the solutions of the embodiments.

In addition, the functional modules in each embodiment of the disclosure may be integrated into one processing module, or each module may exist alone physically, or two or more modules may be integrated into one module. The above-mentioned integrated modules can be implemented in the form of hardware, or can be implemented in the form of software functional modules. When the integrated module is implemented in the form of software functional module and sold or used as an independent product, it may be stored in a computer readable storage medium.

The above embodiments may be implemented in whole or in part by software, hardware, firmware or any combination thereof. When implemented by software, they may be implemented in the form of a computer program product in whole or in part.

The computer program product includes one or more computer instructions. When the computer program instructions are loaded and executed on a computer, the processes or functions described in the embodiments of the disclosure are generated in whole or in part. The computer may be a general-purpose computer, a special-purpose computer, a computer network, or other programmable devices. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, wireless, microwave, etc.) way. The computer readable storage medium may be any available medium that can be stored by a computer, or a data storage device such as server or data center that is integrated with one or more available media. The available medium may be a magnetic medium (for example, floppy disk, hard disk, magnetic tape), an optical medium (for example, DVD), or a semiconductor medium (for example, Solid State Disk (SSD)), etc.

The technical solutions provided by the embodiments of the disclosure are introduced in detail above, specific examples are used in the disclosure to illustrate the principles and embodiments of the disclosure, and the description of the above embodiments is only used to help the understanding of the methods of the disclosure and the core ideas thereof; and at the same time, those ordinary skilled in the art may make modifications on the specific embodiments and the application scope according to the ideas of the disclosure. In summary, the content of this specification should not be construed as a limitation on the disclosure.

It should be understood by those skilled in the art that the embodiments of the disclosure can be provided as methods, systems and computer program products. Thus the disclosure can take the form of hardware embodiments alone, software embodiments alone, or embodiments combining the software and hardware aspects. Also the disclosure can take the form of computer program products implemented on one or more computer usable storage mediums (including but not limited to magnetic disk memories, CD-ROMs, optical memories and the like) containing computer usable program codes therein.

The disclosure is described by reference to the flow charts and/or the block diagrams of the methods, the devices (systems) and the computer program products according to the disclosure. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the disclosure without departing from the spirit and scope of the disclosure. Thus the disclosure is also intended to encompass these modifications and variations to the disclosure as long as these modifications and variations come into the scope of the claims of the disclosure and their equivalents.

## Claims

1. A Physical Random Access Channel, PRACH, signal transmission method, applied to a User Equipment, UE, comprising:
determining delay information for transmitting a PRACH signal based on a system agreement or according to an instruction obtained from a network side device; and
transmitting the PRACH signal at a PRACH signal transmission occasion according to an initial Timing Advance, TA, and the delay information.

2. The method according to claim 1, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

3. The method according to claim 2, wherein the GT adjustment information is: removing a CP part in a PRACH signal format, a length of a newly-added GT, or reserving newly-added guard time required for delayed transmission after the PRACH signal.

4. The method according to claim 2, wherein the transmitting the PRACH signal at the PRACH signal transmission occasion, comprises:
determining a final TA value by subtracting a TA offset value from the initial TA, and transmitting the PRACH signal; or
transmitting the PRACH signal based on a PRACH signal format with a guard interval before a Preamble signal or CP and based on a signal time sequence advanced by the initial TA; or
adding a transmission guard interval based on a signal advanced by the initial TA, and transmitting the PRACH signal.

5. The method according to claim 1 or 2, further comprising:
acquiring configuration information of a PRACH transmission occasion or transmission slot indicated by the network side device to be closed; and
stopping transmitting the PRACH signal or Physical Uplink Shared Channel, PUSCH, data in the PRACH transmission occasion or transmission slot or an adjacent slot according to the configuration information.

6. A Physical Random Access Channel, PRACH, signal transmission method, applied to a network side device, comprising:
determining delay information that a PRACH signal is sent by delay according to a system agreement, or determining delay information that a PRACH signal is sent by delay according to an estimated Timing Advance, TA, error, and indicating the delay information to a User Equipment, UE; and
receiving the PRACH signal sent by the UE at a PRACH signal transmission occasion according to an initial TA and the delay information.

7. The method according to claim 6, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

8. The method according to claim 7, wherein the GT adjustment information is: removing a CP part in a PRACH signal format, a length of a newly-added GT, or reserving newly-added guard time required for delayed transmission after the PRACH signal.

9. The method according to claim 6 or 7, further comprising:
in a case that signal interference occurs at the UE or between UEs due to delayed transmission of the PRACH signal, instructing a corresponding UE to close a part of continuous PRACH transmission occasions or to close transmission slots of a Physical Uplink Shared Channel, PUSCH, adjacent to PRACH signal transmission occasions.

10. The method according to claim 6 or 7, wherein a size of a guard interval or transmission guard interval for delayed transmission of the PRACH signal is determined according to at least one of:
user equipment type, user equipment capability, ephemeris algorithm, or accuracy of ephemeris information.

11. A User Equipment, UE, comprising: a memory and a processor;
wherein the memory is configured to store a computer program;
the processor is configured to read the computer program in the memory and perform:
determining delay information for transmitting a PRACH signal based on a system agreement or according to an instruction obtained from a network side device; and
transmitting the PRACH signal at a PRACH signal transmission occasion according to an initial Timing Advance, TA, and the delay information.

12. The UE according to claim 11, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

13. The UE according to claim 12, wherein the GT adjustment information is: removing a CP part in a PRACH signal format, a length of a newly-added GT, or reserving newly-added guard time required for delayed transmission after the PRACH signal.

14. The UE according to claim 12, wherein the processor is further configured to:
determine a final TA value by subtracting a TA offset value from the initial TA, and transmit the PRACH signal; or
transmit the PRACH signal based on a PRACH signal format with a guard interval before a Preamble signal or CP and based on a signal time sequence advanced by the initial TA; or
add a transmission guard interval based on a signal advanced by the initial TA, and transmit the PRACH signal.

15. The UE according to claim 11 or 12, wherein the processor is further configured to:
acquire configuration information of a PRACH transmission occasion or transmission slot indicated by the network side device to be closed;
stop transmitting the PRACH signal or Physical Uplink Shared Channel, PUSCH, data in the PRACH transmission occasion or transmission slot or an adjacent slot according to the configuration information.

16. A network side device, comprising: a memory and a processor;
wherein the memory is configured to store a computer program;
the processor is configured to read the computer program in the memory and perform:
determining delay information that a PRACH signal is sent by delay according to a system agreement, or determining delay information that a PRACH signal is sent by delay according to an estimated Timing Advance, TA, error, and indicating the delay information to a User Equipment, UE; and
receiving the PRACH signal sent by the UE at a PRACH signal transmission occasion according to an initial TA and the delay information.

17. The network side device according to claim 16, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

18. The network side device according to claim 17, wherein the GT adjustment information is: removing a CP part in a PRACH signal format, a length of a newly-added GT, or reserving newly-added guard time required for delayed transmission after the PRACH signal.

19. The network side device according to claim 16 or 17, wherein the processor is further configured to:
in a case that signal interference occurs at the UE or between UEs due to delayed transmission of the PRACH signal, instruct a corresponding UE to close a part of continuous PRACH transmission occasions or to close transmission slots of a Physical Uplink Shared Channel, PUSCH, adjacent to PRACH signal transmission occasions.

20. The network side device according to claim 16 or 17, wherein the processor is configured to determine a size of a guard interval or transmission guard interval for delayed transmission of the PRACH signal according to at least one of:
user equipment type, user equipment capability, ephemeris algorithm, or accuracy of ephemeris information.

21. A User Equipment, UE, comprising:
an instruction receiving module configured to determine delay information for transmitting a PRACH signal based on a system agreement or according to an instruction obtained from a network side device; and
a signal transmission module configured to transmit the PRACH signal at a PRACH signal transmission occasion according to an initial Timing Advance, TA, and the delay information.

22. The UE according to claim 21, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

23. The UE according to claim 22, wherein the GT adjustment information is: removing a CP part in a PRACH signal format, a length of a newly-added GT, or reserving newly-added guard time required for delayed transmission after the PRACH signal.

24. The UE according to claim 22, wherein the signal transmission module is further configured to:
determine a final TA value by subtracting a TA offset value from the initial TA, and transmit the PRACH signal; or
transmit the PRACH signal based on a PRACH signal format with a guard interval before a Preamble signal or CP and based on a signal time sequence advanced by the initial TA; or
add a transmission guard interval based on a signal advanced by the initial TA, and transmit the PRACH signal.

25. The UE according to claim 21 or 22, wherein the signal transmission module is further configured to:
acquire configuration information of a PRACH transmission occasion or transmission slot indicated by the network side device to be closed; and
stop transmitting the PRACH signal or Physical Uplink Shared Channel, PUSCH, data in the PRACH transmission occasion or transmission slot or an adjacent slot according to the configuration information.

26. A network side device, comprising:
an instruction transmission module configured to determine delay information that a PRACH signal is sent by delay according to a system agreement, or determine delay information that a PRACH signal is sent by delay according to an estimated Timing Advance, TA, error, and indicate the delay information to a User Equipment, UE; and
a signal receiving module configured to receive the PRACH signal sent by the UE at a PRACH signal transmission occasion according to an initial TA and the delay information.

27. The network side device according to claim 26, wherein the delay information for transmitting the PRACH signal comprises at least one of:
the initial TA minus a TA offset value;
a guard interval configured before a random access preamble, Preamble, or Cyclic Prefix, CP, in a PRACH signal format;
a transmission guard interval added before transmitting the PRACH signal; or
guard time, GT, adjustment information due to delayed transmission.

28. The network side device according to claim 27, wherein the GT adjustment information is: removing a CP part in a PRACH signal format, a length of a newly-added GT, or reserving newly-added guard time required for delayed transmission after the PRACH signal.

29. The network side device according to claim 26 or 27, wherein the instruction transmission module is further configured to:
in a case that signal interference occurs at the UE or between UEs due to delayed transmission of the PRACH signal, instructing a corresponding UE to close a part of continuous PRACH transmission occasions or to close transmission slots of a Physical Uplink Shared Channel, PUSCH, adjacent to PRACH signal transmission occasions.

30. The network side device according to claim 26 or 27, wherein the instruction transmission module is configured to determine a size of a guard interval or transmission guard interval for delayed transmission of the PRACH signal according to at least one of:
user equipment type, user equipment capability, ephemeris algorithm, or accuracy of ephemeris information.

31. A computer program medium storing a computer program thereon, wherein the computer program, when executed by a processor, implements the method of any one of claims 1-5 or the method of any one of claims 6-10.
